# EUROPEAN PATENT APPLICATION

(11) **EP 2 887 717 A1**
(43) Date of publication of application: **24.06.2015**
(21) Application number: 13197819.9
(22) Date of filing: 17.12.2013
(51) Int. Cl.: H04W 12/06

(54) **Provisioning method and apparatus**

(71) Applicant: Teleena Holding B.V., 3431 HK Nieuwegein (NL)
(72) Inventor: Smit, Timo, 3431 HK Nieuwegein (NL); Baijens, Dirk, 3431 HK Nieuwegein (NL)
(74) Representative: Nederlandsch Octrooibureau

(57) **Abstract**

A provisioning method for a mobile network, wherein the network comprises an authentication center, AuC, and a subscriber database, wherein the method comprises the steps of:
- receiving, by the AuC, an authentication request corresponding to an attempt to register to the network from a subscriber unit comprising a subscriber identification means including a subscriber identity, such as a Subscriber Identity Module, SIM or virtual SIM, vSIM, profile including an International Mobile Subscriber Identity, IMSI;
- receiving and caching, by the subscriber database, the authentication request;
- if the subscriber unit is not provisioned at the AuC, sending by the AuC an error response destined for the subscriber unit;
- receiving, by the subscriber database, the error response;
- matching, by the subscriber database, the error response with the cached authentication request and retrieving from the authentication request the subscriber identity, and
- sending, by the subscriber database, provisioning commands related to the subscriber unit to at least the AuC.

## Description

### Field of the invention

The present invention relates to a provisioning method for a mobile network. More particularly, it relates to a near-real time provisioning method triggered by the first network registration attempt.

### Background of the invention

In current methods for authentication to mobile/wireless networks using Subscriber Identity Module (SIM) cards, at the network side an Authentication Center (AuC) as part of a Home Location Register (HLR) or Home Subscriber Server (HSS) is used to process in real-time authentication algorithm calculations for the device that attempts to authenticate to the network. The access network grants the device only access when both the SIM and AuC have calculated and provided the same keys for a certain subscriber.

User authentication in a mobile network is done using one of a few commonly used mechanisms. One of the most common used algorithms is Milenage, specified in 3GPP specification TS 35.205. An important feature of this algorithm is that the authentication is based on calculations of similar functions in SIM and AuC. These functions use secret keys that are stored in both SIM and AuC. The algorithm set foresees in attacks by eavesdropping and re-playing messages or using the same set of credentials multiple times. Each network operator that issues its own SIMs and has an own HLR/HSS can implement its own variant of the protocol without the need of adaptation of any other network element. Only the SIM and the AuC need to be aligned.

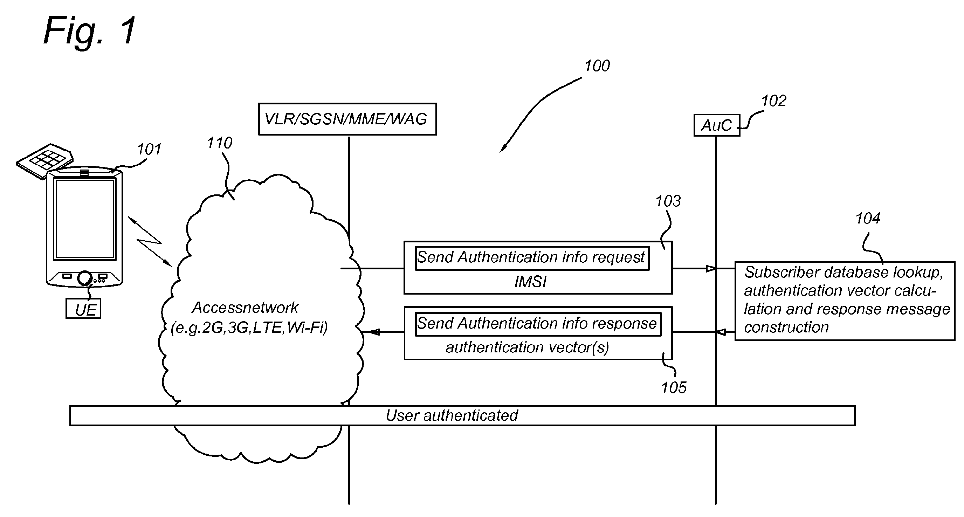

Fig. 1 shows a user authentication mechanism according to the state of the art. In order to register to a mobile network, the SIM 101 uses its unique International Mobile Subscriber Identity (IMSI) as identifier in the AuC. The IMSI is however also used for routing the first authentication messages 103 on first registration in a network. An IMSI is a 15-digit number, according to the ITU recommendation ITU E.212. The first 3 digits determine the home country of the subscriber, the Mobile Country Code (MCC). The subsequent 2 or 3 digits determine the Mobile Network Code (MNC). The remaining digits form the Mobile Subscriber Identification Number (MSIN). When a subscriber tries to register to a network, the serving Visitor Location Register (VLR), Mobile services Switching Center (MSC-S), Mobile Management Entity (MME), or Wireless Access Gateway (WAG) will use the MCC and MNC to route the authentication message to the correct destination network. The first digits of the MSIN can optionally be used to route to a specific Home Location Register (HLR) or Home Subscriber Server (HSS) node within the network's domain or for routing to a 3^{rd} party. In known systems, a matching subscriber authentication profile is already present in the HLR/HSS (and AuC as part of one of these devices). When the AuC receives the authentication message, it performs the keys and vector calculations 104 and it sends an authentication information response message to the SIM 105. At that moment the user is authenticated in the network.

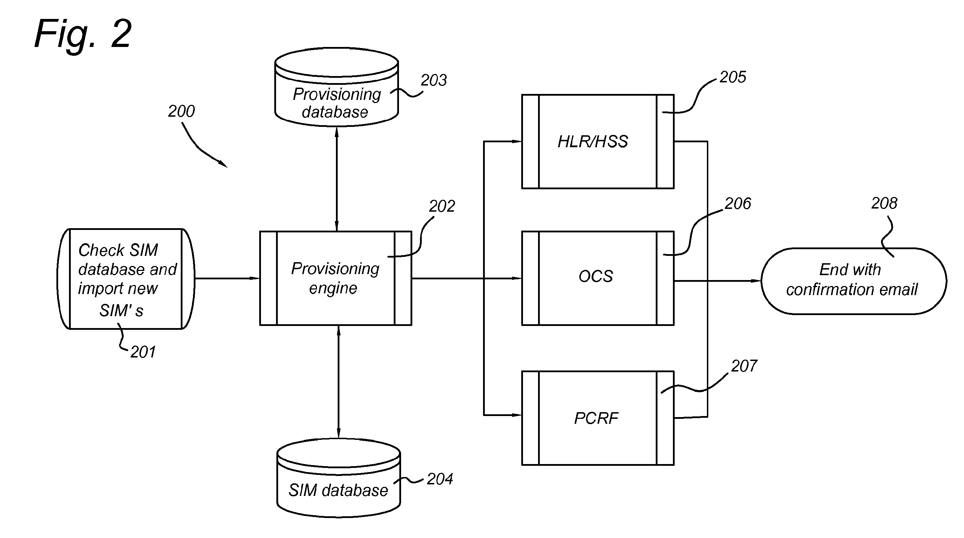

The process of personalizing the SIM cards and provisioning the HLR/HSS is nowadays mainly done off-line and as a batch process. As an example of this process, the operator sends an order for a batch of SIMs to the SIM card vendor using an input file that contains information about the batch, including a list with IMSIs and other subscriber specific parameters. The SIM vendor uses this information to generate PIN codes, administrative keys, encryption keys and so on. This information is then used to personalize the SIMs with. The physical cards will be shipped and a file with the keys, the output file, will be shared with the operator. In turn the operator will use the output file to provision its HLR/HSS. Fig. 2 illustrates a pre-provisioning process according to the state of the art. This process is generally started when the network operator receives from the SIM card manufacturer a new batch of SIM cards and their corresponding keys. Therefore the process does not take place regularly and it depends on the frequency of ordering new batches.

Alternatively, a network operator can decide to pre-provision a large batch of SIM cards upon reception from the manufacturer, or to provision every SIM card when it is purchased by a subscriber. The network operator may check if there are SIMs with a "new" status in the SIM database an in that case, it imports the new SIMs 201. The provisioning engine 202 is responsible for the provisioning of the SIMS at the different elements of the network, such as the HLR/HSS (and the AuC as part of one of these devices) 205, the Online Charging System (OCS) 206, the Policy and Charging Rules Function (PCRF) 207, and also the Service Control Point (SCP), the GSM Service Control Function (gsmSCF), the User Profile Repository (UPR), the Access Network Discovery and Selection Function (ANDSF), the Authentication, Authorization and Accounting (AAA) server and the voicemail server. When the SIMs are successfully provisioned, then the status at the database will be changed to "in use". From that moment on, the provisioned SIMs will be taking resources of the network elements even when they have not yet been used.

Although an advantage of this pre-provisioning method is that it allows for the immediate use of the SIM in a mobile device once it is purchased, it is clear that the subscriber pre-provisioning process has the disadvantage that large amounts of user profiles need to be created before they are actually used.

Device manufacturers can pre-populate devices with a SIM card, or a virtual SIM profile, before shipment of the device to end users. Typically this amount of SIMs will be relatively large compared to how many devices will eventually register to the operator's network. It can take a long time before such SIMs are activated due to devices that reside in warehouses, in stocks at retail shops or at corporations. For every new device typically at least one profile needs to be pre-provisioned. A certain percentage of the pre-provisioned profiles will never be used at all.

Subscribers that have been provisioned at an HLR/HSS which do not use any services (yet) will still use resources in the system, and will thus affect the performance and possibly will have financial impact due to licensing. There is therefore a need for a solution that enables provisioning of subscribers in HLR/HSS/OCS/PCRF or any other subscriber specific network function, such as SCP, gsmSCF, UPR, ANDSF, AAA server and voicemail server that is more efficient than known solutions.

### Summary of the invention

An objective of the present invention is to provide a near real-time provisioning method for a subscriber in a mobile/wireless network that enables provisioning when the user first attempts to authenticate to the network and that avoids inefficient use of the network elements through extensive pre-provisioning of network elements.

In the following description, the term "subscriber unit" or simply "subscriber" or "user" refers, unless otherwise indicated, to a wireless user equipment including some form of subscriber identification means, such as a SIM card or virtual SIM (vSIM) profile.

The invention provides a provisioning method for a mobile network, wherein the network comprises an Authentication Center (AuC) and a subscriber database, wherein the method comprises the steps of: receiving, by the AuC, an authentication request corresponding to a (first) attempt to register to the network from a subscriber unit comprising a subscriber identification means including a subscriber identity, such as a Subscriber Identity Module, SIM or virtual SIM (vSIM) profile including an International Mobile Subscriber Identity (IMSI); receiving and caching, by the subscriber database (302), the authentication request; if the subscriber unit is not provisioned at the AuC, sending by the AuC an error response destined for the subscriber unit; receiving, by the subscriber database, the error response; matching, by the subscriber database, the error response with the cached authentication request and retrieving from the authentication request the subscriber identity, and sending, by the subscriber database, provisioning commands related to the subscriber unit to at least the AuC.

The invention advantageously uses an authentication attempt (for example, the first authentication attempt) by a subscriber unit as the trigger for provisioning the network systems (e.g. AuC, OCS, etc). This means that only subscriber units that are actually used are provisioned, and that, for example, unsold SIM cards do not already take up network resources. The batch provisioning of the network systems for newly made SIMs, as explained in reference to figure 2, can thus be omitted.

An embodiment of the present invention provides a provisioning method, wherein receiving by the subscriber database the error response comprises intercepting said error response and allowing the error response to reach the subscriber unit.

A further embodiment of the present invention provides a provisioning method, wherein receiving by the subscriber database the error response comprises discarding the error response.

By intercepting the error response from the AuC, the AuC does not need to be modified. A known AuC can be used in combination with an intercepting subscriber database according the invention. Alternatively, the functions of the AuC and subscriber database may be integrated in a system according the invention.

The interception of the error response by the subscriber database does not mean that the error response does not go any further when it reaches the subscriber database. The error response may or may not reach the subscriber unit, depending on the embodiment of the present invention.

A further embodiment of the present invention provides a provisioning method, wherein the subscriber database also sends provisioning commands to one or more of an Online Charging System (OCS), a Policy Control and Charging Rules Function (PCRF), a Home Location Register (HLR), a Home Subscriber System

(HSS), a Service Control Point (SCP), a GSM Service Control Function (gsmSCF), a User Profile Repository (UPR), an Access Network Discovery and Selection Function (ANDSF), an Authentication, Authorization and Accounting (AAA) server and a voicemail server.

By provisioning as many systems as possible, as late as possible, the overhead from not yet used SIMs is reduced.

A further embodiment of the present invention provides a provisioning method, wherein the AuC sends a provisioning acknowledgment message to the subscriber database upon reception of the provisioning commands.

A further embodiment of the present invention provides a provisioning method, wherein the AuC authenticates the subscriber upon a second attempt by the subscriber to register to the network.

A further embodiment of the present invention provides a provisioning method, wherein the AuC includes a processor configured to calculate authentication vectors to respond to the authentication requests.

A further embodiment of the present invention provides a provisioning method, wherein the subscriber database contains the subscriber profile information.

A further embodiment of the present invention provides a provisioning method, wherein the provisioning commands include an international mobile subscriber identity, IMSI, a mobile subscriber ISDN (MSISDN), security keys, and/or user profiles.

The present invention further provides a subscriber database for connecting to an Authentication Center (AuC) the database comprising a processing unit configured to: receive and cache an authentication request sent by a subscriber unit destined to the AuC in a (first) attempt to authenticate to the network; receive an error message from the AuC destined to a subscriber unit, resulting from a failed authentication attempt by the subscriber unit; match, by the subscriber database, the error response with the cached authentication request and retrieve from the authentication request the subscriber identity; query a subscriber information database for subscriber information using the determined subscriber identity; if subscriber information is retrieved by the query, sending provisioning commands based on the retrieved subscriber information to at least the AuC.

An embodiment of the present invention provides a subscriber database, wherein receiving by the subscriber database the error response comprises discarding the error response

A further embodiment of the present invention provides a subscriber database, wherein the processing unit is further configured to: send provisioning commands based on the retrieved subscriber information to one or more of of an Online Charging System (OCS), a Policy Control and Charging Rules Function (PCRF), a Home Location Register (HLR), a Home Subscriber System (HSS), a Service Control Point (SCP), a GSM Service Control Function (gsmSCF), a User Profile Repository (UPR), an Access Network Discovery and Selection Function (ANDSF), an Authentication, an Authorization and Accounting (AAA) server and a voicemail server..

A further embodiment of the present invention provides a subscriber database, wherein the subscriber information database is comprised in the subscriber database.

The present invention further provides a system of an AuC and a connected subscriber database.

It is possible to create a system according the invention by combining a known AuC with a subscriber database according the invention. Alternatively, it is also possible to add functionality of the subscriber database to the AuC. In fact, the entire subscriber database could be integrated in the AuC.

The present invention further provides a computer program product comprising computer instructions which, when executed on a server or on a plurality of connected servers, causes said server or plurality of connected servers to behave like the subscriber database.

### Brief description of the Figures

On the attached drawing sheets,
- Fig. 1 illustrates a subscriber authentication process according to an embodiment of the state of the art;
- Fig. 2 shows a pre-provisioning process according to an embodiment of the state of the art;
- Fig. 3 shows a subscriber authentication system according to an embodiment of the present invention;
- Fig. 4 illustrates a subscriber authentication process according to an embodiment of the present invention; and
- Fig. 5 shows a subscriber authentication process flow chart according to an embodiment of the present invention.

### Detailed description

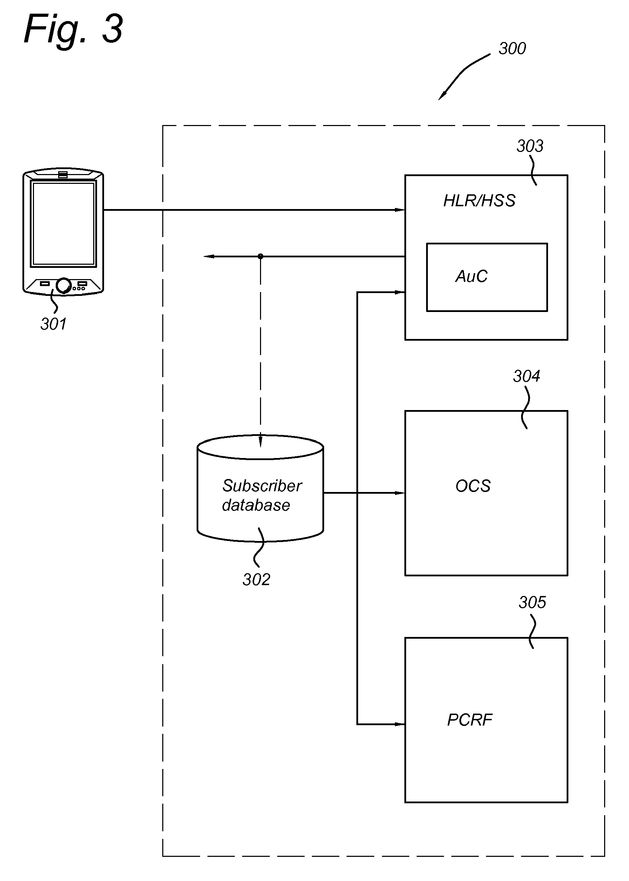

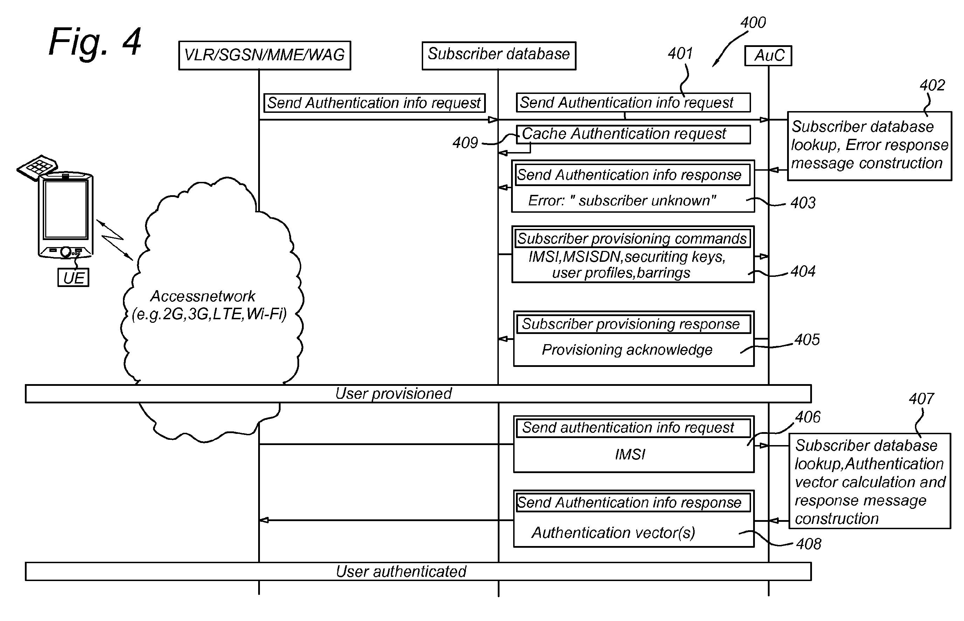

Fig. 3 schematically shows a subscriber authentication system 300 according to an embodiment of the present invention. When the subscriber 301 first attempts to authenticate to the network, it sends an authentication request to the AuC. The subscriber database 302 receives a copy of the authentication request and caches it (or a part of it) for later reference. The authentication request is then received by the AuC. The AuC 303, which is part of the HLR or HSS, does not recognize the subscriber identified in the received request, since the network (meaning the AuC and associated modules such as the OCS,PCRF, HLR, HSS, SCP, gsmSCF, UPR, ANDSF, AAA server and voicemail server.) has not yet been provisioned with data relating to the subscriber's SIM. At that moment, as required by the appropriate telecom standard, the AuC emits an error message destined for the subscriber unit 301 which is intercepted by the subscriber database 302. The intercepted error is still routed to the subscriber unit 301, so that the subscriber unit will be made aware that the first attempt failed. Alternatively, the error message will be dropped, in the assumption that the subscriber unit 301 will do an authentication re-attempt if no response is received. The subscriber identity will be obtained by the subscriber database 302 from the initial authentication message, which has also been intercepted by the subscriber database and cached, as will be further explained regarding Fig. 4.

As an optional step, the subscriber database may check that the authentication request and/or the intercepted error message corresponds to a first authentication attempt, and not to a later authentication attempt. The subscriber database 302 consults an information database (this may be advantageously comprised inside the subscriber database 302, but it may also be an external database) to see if information is available related to the subscriber unit 302 to which the intercepted error message is destined. For example, the IMSI (for example as obtained from the cached request) or any other suitable identifier may be used as a key in a query of the information database. The subscriber database 302 generates then the provisioning commands related to the subscriber, and sends those provisioning commands to the AuC and, optionally, to other network elements, such as the Online Charging System (OSC) 30 the Policy and Charging Rules Function (PCRF) 305, and also to the Home Location Register (HLR), Home Subscriber System (HSS), Service Control Point (SCP), GSM Service Control Function (gsmSCF), User Profile Repository (UPR), Access Network Discovery and Selection Function (ANDSF), Authentication, Authorization and Accounting (AAA) server and voicemail server..

When the SIM is manufactured, it is provided an IMSI number. In an exemplary embodiment according the invention, this number is initially stored (for example using a regular batch update process) in the subscriber database 302, but it is initially not present in any other element in the network. In other words, the network has not been provisioned yet for that particular SIM. Accordingly, the IMSI is not recognized by the AuC when routing the first authentication request on the first attempt to authenticate to the network. Therefore when the subscriber first access the network, the AuC does not recognize it, because it does not have information about it yet. Thus, until the subscriber first attempts to authenticate to the network, there are no resources being unnecessarily used on the network side. Upon the subscriber's first attempt, the subscriber is provisioned at the different network elements, that only then make use of their resources.

Fig. 4 illustrates a subscriber authentication process 400 according to an embodiment of the present invention. When the subscriber unit 301 first attempts to authenticate to the network, it sends an authentication information request 401 to the AuC 303. This authentication request is also intercepted 409 by the subscriber database 302, so that the subscriber database can later match it with an error response received to retrieve a subscriber identity. Upon reception of the request, the AuC queries its information database in order to locate information relating to the subscriber unit from which the authentication attempt originated. If however the AuC does not recognize the subscriber, it generates an error response message 402 which it then sends 403 to the subscriber unit 301. The error response message does not have to contain information related to the subscriber unit, such as the subscriber identity. The subscriber database intercepts the error message 404 and, having previously received and cached the authentication request, matches it with the received error response and retrieves the subscriber identity, which the subscriber database uses to generate the subscriber provisioning commands. It is noted that intercepting the message does not necessarily involve stopping it - the message could reach the subscriber unit as well, so that the subscriber unit will attempt a second authentication. In an embodiment, intercepting the message may comprise delaying the message for a predetermined amount of time. This can advantageously be used to better ensure that the provisioning of the network has been completed by the time the second authentication attempt arrives from the subscriber unit 301. Alternatively, it is also possible to discard the error message after interception by the subscriber database 302, so that it never reaches the subscriber unit 301. In that case, the subscriber unit is expected to issue a second authentication request because it failed to receive a response to the first request.

The provisioning commands may include one or more of the SIM IMSI, the MSISDN, security keys, user profiles and barrings. These provisioning commands are sent to the AuC 405, and also to other elements of the network such as the OCS, PCRF, HSS, SCP, gsmSCF, UPR, ANDSF, AAA server and voicemail server., as previously explained. When the AuC receives the provisioning commands sends a provisioning acknowledgment message to the subscriber database, and from that moment the user is provisioned at the network.

However, the user is not yet authenticated in the network. In order for the user to be authenticated, the present invention makes use of the 'retry' technique currently used for network access: when a user fails in authenticating to a network, the user retries the authentication. In the present case, this retry is not performed due to an unexpected failure in a first access, but as a part of the authentication process. When the subscriber unit 301 attempts to authenticate to the network for the second time, the subscriber unit 301 sends again an authentication information request 406 to the AuC. In this case, however, the AuC does recognize the user as to be provisioned, and calculates the authentication vectors and keys 407 that then sends to the subscriber unit 301 as an authentication information response. From this moment, the subscriber unit 301 is both provisioned and authenticated in the network.

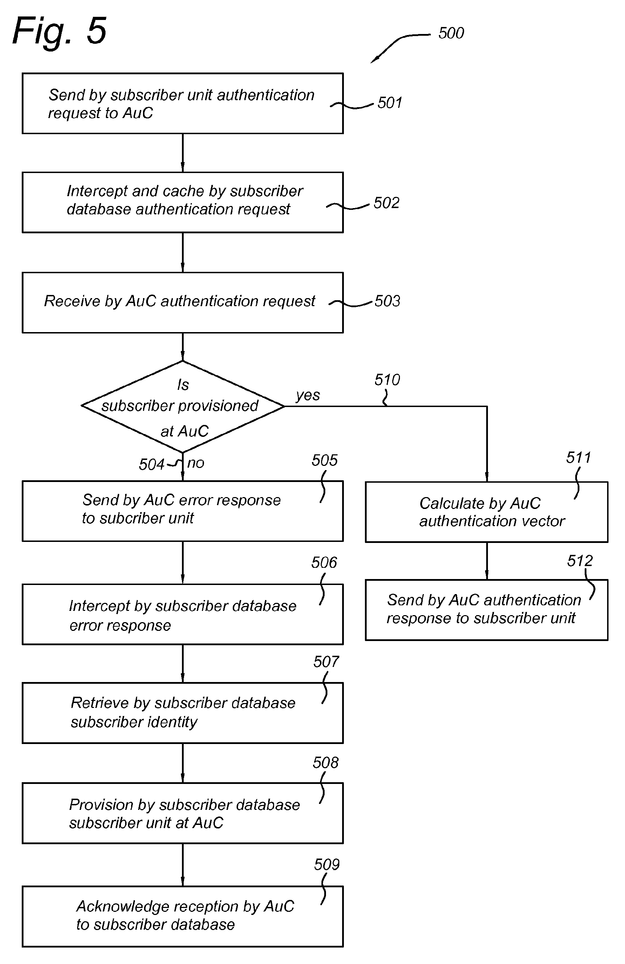

Fig. 5 shows a flow chart of a subscriber authentication process according to an embodiment of the present invention.

The subscriber unit first sends to the AuC an authentication request as an attempt to authenticate to the network. This authentication request is intercepted by the subscriber database, which caches it for later subscriber identification.

The authentication message is further received by the AuC, which searches for information related to the subscriber unit in the AuC database. If the subscriber unit is not provisioned at the AuC, the AuC sends an error response to the subscriber unit.

This error response is intercepted by the subscriber database, that matches the previously cached authentication request with the error response and retrieves a subscriber identity. The retrieved subscriber identity is used by the subscriber database to generate provisioning commands that the subscriber database sends to the AuC to provision the subscriber unit at the AuC. As has been explained above, the subscriber unit is also provisioned at other network systems, such as OCS, PCRF, HSS, SCP, gsmSCF, UPR, ANDSF, AAA server and voicemail server. After making use of the error response, the subscriber database may allow the error response to further reach the subscriber database or may discard the error response.

Upon reception of the provisioning commands for the subscriber unit by the AuC, the AuC acknowledges the reception of said commands to the subscriber database, and at this point the user is provisioned at the network.

Upon the reception by the subscriber unit of the error response, the subscriber unit believes that the attempt to authenticate to the network has failed. Therefore, the subscriber unit attempts to authenticate to the network a second time, sending an authentication request to the AuC. At this point, since the subscriber unit is already provisioned at the AuC, the AuC performs the authentication vector calculations and sends to the subscriber unit an authentication response. At this point, the subscriber unit is authenticated in the network. Alternatively, if the subscriber unit does not receive any response (e.g. when the error response is intercepted and discarded by the subscriber database, so that it does not reach the subscriber unit), the subscriber unit may also send a second authentication request.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A provisioning method for a mobile network,
wherein the network comprises an authentication center, AuC, (303) and a subscriber database (302), wherein the method comprises the steps of:
- receiving (401), by the AuC, an authentication request corresponding to an attempt to register to the network from a subscriber unit (301), the subscriber unit comprising a subscriber identification means including a subscriber identity, such as a Subscriber Identity Module, SIM or virtual SIM, vSIM, profile including an International Mobile Subscriber Identity, IMSI;
- receiving and caching, by the subscriber database (302), the authentication request;
- if the subscriber unit is not provisioned at the AuC, sending (403), by the AuC, an error response destined for the subscriber unit (301);
- receiving, by the subscriber database, the error response;
- matching, by the subscriber database, the error response with the cached authentication request and retrieving from the authentication request the subscriber identity, and
- sending (404), by the subscriber database, provisioning commands related to the subscriber unit (301) to at least the AuC.

2. The provisioning method of claim 1, wherein receiving by the subscriber database (302) the error response comprises intercepting said error response and allowing the error response to reach the subscriber unit (301).

3. The provisioning method of claim 2, wherein receiving by the subscriber database (302) the error response comprises discarding the error response.

4. The provisioning method of any one of the previous claims, wherein the subscriber database also sends provisioning commands to at least one of an Online Charging System, OCS, (304), a Policy Control and Charging Rules Function, PCRF, (305), a Home Location Register, HLR, a Home Subscriber System, HSS, a Service Control Point, SCP, a GSM Service Control Function, gsmSCF, a User Profile Repository, UPR, an Access Network Discovery and Selection Function, ANDSF, an Authentication, Authorization and Accounting, an AAA server and a voicemail server.

5. The provisioning method of any one of the previous claims, wherein the AuC (303) sends a provisioning acknowledgment message (405) to the subscriber database upon reception of the provisioning commands.

6. The provisioning method of any one of the previous claims, wherein the AuC (303) authenticates the subscriber (408) upon a second attempt by the subscriber to register to the network (406).

7. The provisioning method of any one of the previous claims, wherein the AuC includes a processor configured to calculate authentication vectors to respond to the authentication requests (407).

8. The provisioning method of any one of the previous claims, wherein the subscriber database contains the subscriber profile information.

9. The provisioning method of any one of the previous claims, wherein the provisioning commands includes an international mobile subscriber identity, IMSI, a mobile subscriber ISDN, MSISDN, security keys, and/or user profiles.

10. A subscriber database (302) for connecting to an Authentication Center, AuC, (303), the database comprising a processing unit configured to:
- receive and cache an authentication request sent by a subscriber unit (301) destined to the AuC (303) in an attempt to authenticate to the network;
- receive an error response from the AuC destined to a subscriber unit (301), resulting from a failed authentication attempt by the subscriber unit;
- match, by the subscriber database, the error response with the cached authentication request and retrieve from the authentication request the subscriber identity;
- query a subscriber information database for subscriber information using the determined subscriber identity; and
- if subscriber information is retrieved by the query, sending provisioning commands based on the retrieved subscriber information to at least the AuC.

11. The subscriber database (302) of claim 10, wherein receiving by the subscriber database the error response comprises discarding the error response.

12. The subscriber database (302) of any one of the claims 10-11, wherein the processing unit if further configured to:
- send provisioning commands based on the retrieved subscriber information to at least one of an Online Charging System, OCS, (304), a Policy Control and Charging Rules Function, PCRF, (305), a Home Location Register, HLR, a Home Subscriber System, HSS, a Service Control Point, SCP, a GSM Service Control Function, gsmSCF, a User Profile Repository, UPR, an Access Network Discovery and Selection Function, ANDSF, an Authentication, Authorization and Accounting, an AAA server and a voicemail server.

13. The subscriber database (302) of any one of the claims 10-12, wherein the subscriber information database is comprised in the subscriber database.

14. A system of an AuC (303) and a connected subscriber database (302) according to any one of the claims 10-13.

15. Computer program product comprising computer instructions which, when executed on a server or on a plurality of connected servers, causes said server or plurality of connected servers to behave like the subscriber database (302) of any one of claims 10-13 or the system of claim 14.
